# FASCICULE DE BREVET EUROPEEN

(11) **EP 1 054 173 B1**
(45) Date de publication et mention de la délivrance du brevet: **05.01.2005**
(21) Numéro de dépôt: 00401330.6
(22) Date de dépôt: 16.05.2000
(51) Int. Cl.: F16C 7/02, B60K 5/12

(54) **Bielle destinée à limiter des débattements relatifs entre deux éléments rigides**
Stange zur Begrenzung der Relativbewegung zwischen zwei starren Elementen
Connecting rod for limiting relative movement between two rigid elements

(30) Priorité: 21.05.1999 FR 9906482
(43) Date de publication de la demande: 22.11.2000
(73) Titulaire: HUTCHINSON, 75008 Paris (FR)
(72) Inventeur: Aazizou, Khalid, 28200 La Chapelle du Noyer (FR); Sauvat, Gilles, 28220 Cloyes sur Loir (FR)
(74) Mandataire: Burbaud, Eric

(56) Documents cités:
- EP-A- 0 176 934
- EP-A- 0 229 227
- FR-A- 2 765 503
- GB-A- 1 094 950
- US-A- 3 559 503

## Description

L'invention concerne les bielles destinées à limiter des débattements relatifs entre des premier et second éléments rigides, essentiellement selon une direction longitudinale.

Les bielles du genre en question sont par exemple destinées à relier, d'une part, les caisses des véhicules et, d'autre part, les moteurs à combustion interne des véhicules considérés, notamment (mais non exclusivement) les moteurs à suspension pendulaire.

Elles sont montées de façon à travailler essentiellement en traction et en compression selon leur direction longitudinale.

Parmi ces bielles, l'invention concerne plus particulièrement celles comprenant un corps rigide allongé qui s'étend sensiblement selon la direction longitudinale et qui relie entre eux des premier et second manchons, ces deux manchons étant destinés à être articulés respectivement par rapport aux éléments rigides et présentant respectivement des axes centraux parallèles entre eux et perpendiculaires à la direction longitudinale, ledit corps comportant deux côtés opposés longitudinaux sur lesquels sont formées respectivement des première et seconde nervures externes longitudinales qui s'étendent chacune entre les deux manchons, le corps de la bielle comportant en outre au moins une première nervure transversale comportant :
- une première partie qui relie entre eux le premier manchon et la première nervure externe longitudinale de manière à former une première structure triangulaire avec une première portion dudit premier manchon et une première portion de la première nervure externe longitudinale,
- et une seconde partie reliant entre eux le premier manchon et la seconde nervure externe longitudinale de manière à former une seconde structure triangulaire avec une seconde portion dudit premier manchon et une première portion de la seconde nervure externe longitudinale.

Le document GB-A-1 094 950 décrit une bielle de ce type, qui présente l'inconvénient que ses manchons peuvent dans certains cas se déformer par ovalisation à la suite des efforts de traction supportés par ladite bielle.

La présente invention a notamment pour but de remédier à cet inconvénient.

A cet effet, la bielle selon l'invention es caractérisée en ce que les première et seconde nervures externes longitudinales comportent chacune au moins deux parties qui divergent en s'écartant de la direction longitudinale respectivement à partir des premier et second manchons en formant avec la direction longitudinale un angle aigu supérieur à 10°.

Grâce à ces dispositions, on améliore nettement la résistance de la bielle vis-à-vis des efforts de traction, ou au contraire on peut réduire nettement la masse de la bielle pour obtenir des performances mécaniques similaires aux performances obtenues dans l'art antérieur.

Dans des modes de réalisation préférés de la bielle selon l'invention, on peut éventuellement avoir recours en outre à l'une et/ou à l'autre des dispositions suivantes :
- la première nervure transversale est sensiblement rectiligne ;
- la première nervure transversale est coudée en son milieu, en présentant une concavité tournée vers le second manchon ;
- le corps comporte en outre une seconde nervure transversale qui comporte :
   . une première partie qui relie entre eux le second manchon et la première nervure externe longitudinale de manière à former une troisième structure triangulaire avec une première portion dudit second manchon et une second portion de la première nervure externe longitudinale,
   . et une seconde partie reliant entre eux le second manchon et la seconde nervure externe longitudinale de manière à former une quatrième structure triangulaire avec une seconde portion dudit second manchon et une seconde portion de la seconde nervure externe longitudinale ;
- la seconde nervure transversale est sensiblement rectiligne ;
- la seconde nervure transversale est coudée en son milieu, en présentant une concavité tournée vers le premier manchon ;
- les deux manchons sont reliés entre eux par au moins une nervure longitudinale centrale qui est disposée entre les première et seconde nervures externes longitudinales et qui est reliée à chaque nervure transversale ;
- les deux parties divergentes de chaque nervure externe longitudinale se rejoignent au niveau du point de jonction entre ladite nervure externe longitudinale et la première nervure transversale ;
- les deux parties divergentes des première et seconde nervures externes longitudinales sont constituées respectivement par lesdites première et seconde portions de chaque nervure externe longitudinale, lesdites première et seconde portions de chaque nervure externe longitudinale étant reliées entre elles par l'intermédiaire d'une partie rectiligne qui appartient à la nervure externe longitudinale correspondante.

D'autres caractéristiques et avantages de la présente invention apparaîtront au cours de la description détaillée suivante de deux de ses formes de réalisation, données à titre d'exemples non limitatifs, en regard des dessins joints.

Sur les dessins :
- la figure 1 est une vue en perspective d'une première bielle non réalisée selon l'invention,
- la figure 2 est une vue en plan d'une seconde bielle non réalisée selon l'invention,
- les figures 3 à 6 sont des vues analogues à la figure 2, respectivement pour des troisième et quatrième bielles non réalisées selon l'invention et pour des cinquième et sixième bielles selon deux formes de réalisation de l'invention.

La description des première, deuxième, troisième et quatrième bielles est donnée ici pour mieux faire comprendre l'invention, bien que ces bielles ne soient pas réalisées selon l'invention.

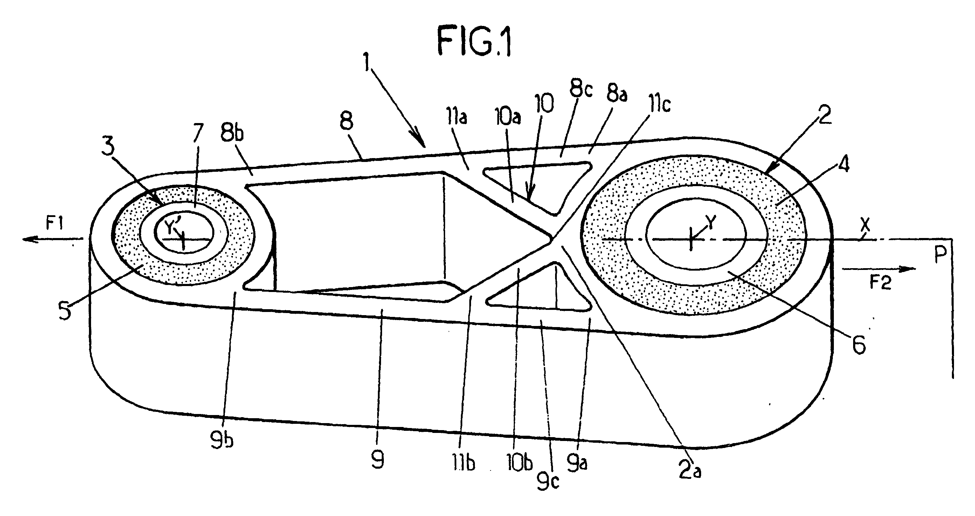

En référence aux figures 1 à 6, la bielle comprend essentiellement un corps 1 rigide s'étendant selon un axe longitudinal X entre deux manchons rigides 2 et 3 qui sont destinés à être articulés respectivement à la caisse du véhicule et au moteur, selon deux axes de pivotement Y, Y' perpendiculaires à l'axe X.

Le corps 1 et les manchons 2 et 3 sont réalisés en métal, généralement moulés d'une seule pièce en fonte ou en alliage léger, et ils sont symétriques par rapport à un plan médian P contenant les axes X, Y, Y'. De plus, les manchons 2 et 3 sont généralement reliés respectivement à la caisse et au moteur par l'intermédiaire de corps en élastomère 4 et 5 qui sont eux-mêmes disposés respectivement à l'intérieur des manchons 2 et 3 et qui eux-mêmes entourent respectivement des armatures tubulaires intérieures 6 et 7.

Le corps 1, quant à lui, comprend dans tous les cas deux nervures externes 8, 9 qui s'étendent chacune sensiblement selon l'axe longitudinal X entre deux extrémités correspondantes 8a, 8b et 9a, 9b qui se raccordent respectivement aux deux manchons 2 et 3, lesdites nervures étant aplaties sensiblement parallèlement au plan médian P susmentionné.

Les nervures 8 et 9 sont destinées à travailler en traction lorsque la bielle est soumise à deux forces opposées F1, F2 orientées respectivement selon l'axe longitudinal X.

De plus, dans l'exemple de la figure 1, le corps 1 comporte une autre nervure 10 qui s'étend sensiblement perpendiculairement à l'axe longitudinal X entre les deux nervures externes longitudinales 8 et 9 et qui comporte une partie médiane 11c raccordée à l'un des manchons, par exemple le manchon 2, dans une région 2a de celui-ci qui est contenue dans le plan médian P.

Ladite nervure 10 comporte en outre deux extrémités 11a, 11b qui se raccordent respectivement auxdites nervures externes longitudinales 8 et 9, à proximité du manchon 2, de manière à présenter des première et seconde moitiés 10a et 10b symétriques par rapport au plan médian P.

Ainsi, il est formé une première structure triangulaire dont les trois côtés sont constitués respectivement par la première moitié 10a de la nervure 10, une portion 8c de la nervure 8 qui s'étend entre l'extrémité lia de la nervure 10 et l'extrémité 8a de la nervure 8, et la portion du manchon 2 qui s'étend entre sa région 2a et ladite extrémité 8a de la nervure 8.

De la même façon, il est formé une seconde structure triangulaire dont les trois côtés sont constitués respectivement par la seconde moitié 10b de la nervure 10, une portion 9c de la nervure 9 qui s'étend entre l'extrémité 11b de la nervure 10 et l'extrémité 9a de la nervure 9, et la portion du manchon 2 qui s'étend entre sa région 2a et ladite extrémité 9a de la nervure 9.

Cette nervure 10 constitue en fait une nervure de renfort transversale qui, compte tenu de son orientation et de sa disposition proche du manchon 2, a pour effet de limiter avantageusement l'ovalisation de ce dernier selon l'axe longitudinal X, dans le cas où la bielle est sollicitée en traction, comme indiqué par la flèche F2.

Sur la figure 1, la nervure transversale 10 est coudée dans sa partie médiane 11c de façon à ce que sa concavité soit orientée vers le manchon 3.

Les manchons 2 et 3 ont, quant à eux, chacun une section circulaire, le diamètre du manchon 2 étant ici supérieur à celui du manchon 3.

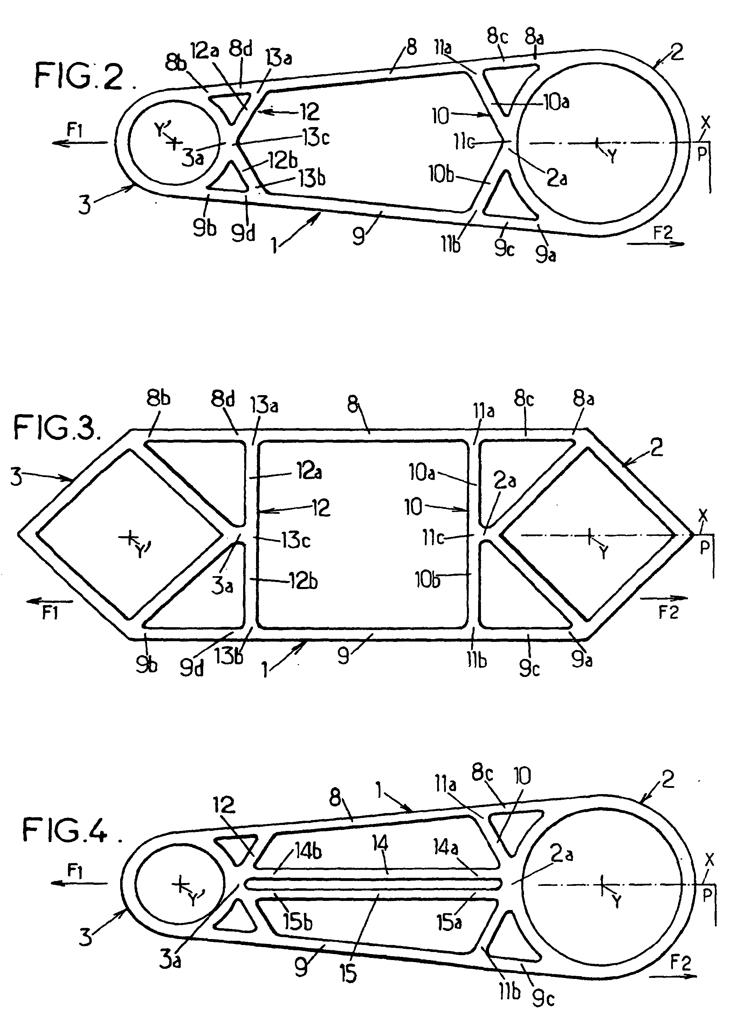

La bielle de la figure 2 correspond à celle représentée sur la figure 1 et s'en distingue uniquement par le fait que la bielle comporte une autre nervure 12 qui s'étend sensiblement perpendiculaire-ment à l'axe longitudinal X entre les deux nervures externes longitudinales 8 et 9 mais qui, cette fois, est agencée du côté du manchon 3.

Comme la nervure transversale 10, la nervure 12 comporte une partie médiane 13c raccordée au manchon 3, dans une région 3a de celui-ci qui est contenue dans le plan médian P.

Ladite nervure 12 comporte également deux extrémités 13a, 13b qui se raccordent respectivement auxdites nervures externes longitudinales 8 et 9, à proximité du manchon 3, de manière à présenter des première et seconde moitiés 12a et 12b symétriques par rapport au plan médian P.

Ainsi, comme dans le cas de la nervure transversale 10, il est formé une troisième structure triangulaire dont les trois côtés sont constitués respectivement par la première moitié 12a de la nervure 12, une portion 8d de la nervure 8 qui s'étend entre l'extrémité 13a de la nervure 12 et l'extrémité 8b de la nervure 8, et la portion du manchon 3 qui s'étend entre sa région 3a et ladite extrémité 8b de la nervure 8.

De la même façon, il est formé une quatrième structure triangulaire dont les trois côtés sont constitués respectivement par la seconde moitié 12b de la nervure 12, une portion 9d de la nervure 9 qui s'étend entre l'extrémité 13b de la nervure 12 et l'extrémité 9b de la nervure 9, et la portion du manchon 3 qui s'étend entre sa région 3a et ladite extrémité 9b de la nervure 9.

La nervure transversale 12 est en outre, comme la nervure transversale 10, coudée dans sa partie médiane 13c de façon à ce que sa concavité soit orientée vers le manchon 2.

Cette nervure transversale 12 a la même fonction que la nervure transversale 10 en ce qui concerne la limitation d'une ovalisation éventuelle du manchon 3 selon l'axe X suite à une sollicitation en traction de la bielle, comme indiqué par la flèche F1.

En référence à la figure 3, la bielle illustrée est une variante de la bielle représentée sur la figure 2, selon laquelle les manchons 2 et 3 ont, d'une part, la même section, et, d'autre part, une section rectangulaire au lieu d'une section circulaire.

Quant aux nervures transversales 10 et 12, elles ne sont plus coudées respectivement en leur milieu, mais sont chacune sensiblement droites et perpendiculaires aux nervures externes longitudinales 8 et 9.

En référence à la figure 4, la bielle illustrée correspond à celle représentée sur la figure 2 et s'en distingue uniquement par le fait que la bielle comporte au moins une autre nervure, par exemple deux nervures 14 et 15 qui sont disposées entre les nervures externes longitudinales 8 et 9 et qui s'étendent chacune selon l'axe longitudinal X entre deux extrémités correspondantes 14a, 14b et 15a, 15b se raccordant respectivement aux régions 2a et 3a des manchons 2 et 3. Lesdites nervures 14 et 15 sont en outre symétriques l'une de l'autre par rapport au plan médian P et aplaties parallèlement à ce dernier.

Les nervures 14 et 15 constituent ainsi deux nervures longitudinales de renfort supplémentaires qui permettent, en association avec les nervures longitudinales 8 et 9, de renforcer avantageusement la résistance à la traction de la bielle selon l'invention.

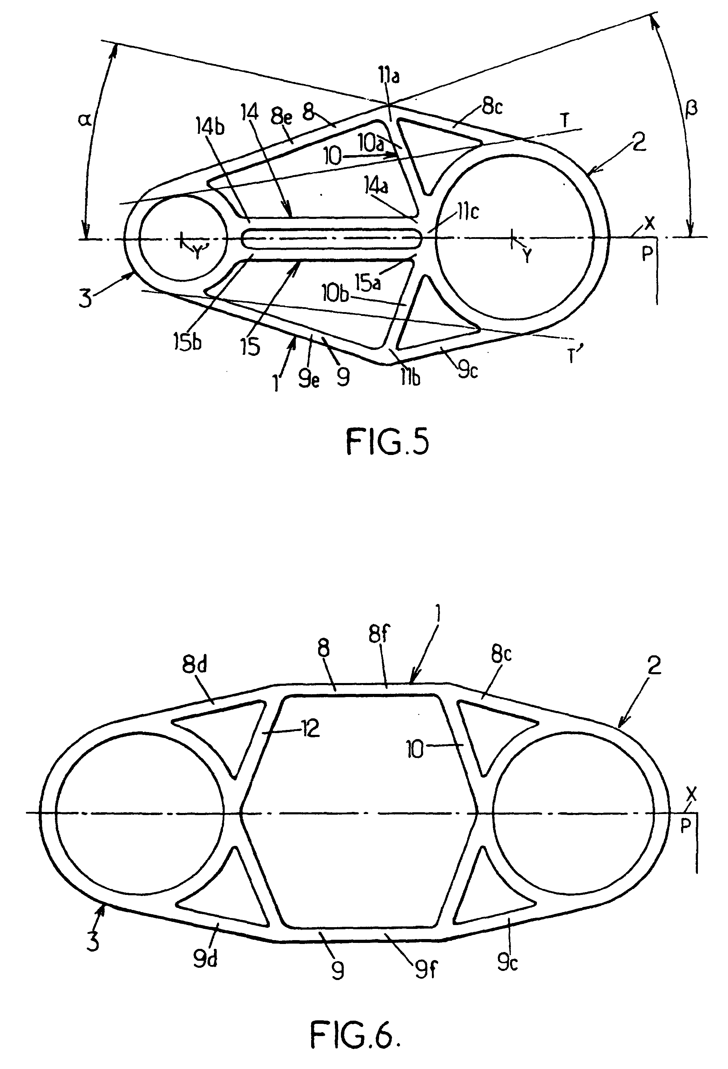

En référence à la figure 5, le mode de réalisation illustré correspond à la bielle représentée sur la figure 4 et s'en distingue uniquement par le fait que la nervure transversale 12 a été supprimée et que les nervures longitudinales 8 et 9 ne sont plus droites.

Dans cet exemple, la portion 8c de la nervure longitudinale 8 diverge à partir du manchon 2 en formant avec le plan médian P un angle aigu a qui est supérieur à 10°. Cette portion 8c est rejointe, au niveau de l'extrémité 11a de la nervure transversale 10, par la partie restante 8e de la nervure longitudinale 8, qui diverge quant à elle à partir du manchon 3 en formant avec le plan médian P un angle aigu β qui est supérieur à 10°. Compte tenu de la symétrie par rapport au plan médian P, la portion 9c et la partie restante 9e de la nervure longitudinale 9 divergent respectivement de la même façon que la portion 8c et la partie restante 8e de la nervure longitudinale 8.

Compte tenu de la valeur supérieure à 10° des angles aigus α et β, les extrémités 11a et 11b de la nervure transversale 10 sont situées nettement en dehors de la zone délimitée par une première tangente T et une seconde tangente T' qui sont respectivement communes aux deux manchons 2 et 3. Cette disposition des extrémités de la nervure transversale, que l'on ne trouve pas dans les bielles de l'état de la technique, présente l'intérêt de rigidifier encore davantage le corps 1 de la bielle de manière à empêcher l'ovalisation des manchons 2 et 3 lorsque cette dernière est soumise à un effort de traction.

En référence à la figure 6, le mode de réalisation illustré est une variante de la bielle représentée sur la figure 2, selon laquelle les manchons 2 et 3 ont la même section et selon laquelle les première et seconde portions 8c, 8d de la nervure longitudinale 8, de même que les première et seconde portions 9c et 9d de la nervure longitudinale 9, divergent respectivement à partir des manchons 2 et 3, en formant chacune, avec le plan médian P, un angle aigu supérieur à 10°, comme dans le cas du mode de réalisation de la figure 5. La portion restante 8f de la nervure longitudinale 8, qui est comprise entre les deux portions divergentes 8c et 8d, est rectiligne et sensiblement parallèle au plan médian P. Il en est de même pour la portion restante 9f de la nervure longitudinale 9, qui est quant à elle comprise entre les deux portions divergentes 9c et 9d.

L'expérience montre que vis-à-vis des effort longitudinaux, la rigidité des bielles du type de celles représentées sur les figures 1 à 5 est environ 2 à 3 fois supérieure à celle des bielles de l'art antérieur, lorsque ces bielles sont considérées à masse égale.

Ainsi, pour des bielles présentant chacune une masse de, par exemple, 235g, il a été observé qu'une bielle de l'art antérieur commence à se déformer longitudinalement sous l'action d'une force de traction égale à environ 17 kN, tandis qu'une bielle selon l'invention commence à se déformer longitudinalement sous l'action d'une force de traction égale à environ 40 kN.

Par conséquent, avec une masse réduite à peu près de moitié, les bielles selon l'invention peuvent présenter les mêmes performances que les bielles de l'art antérieur en termes de rigidité et de résistance à la traction. Leur coût s'en trouve donc réduit fortement.

Il va de soi que les caractéristiques propres à l'un des modes de réalisation susmentionnés pourraient être combinées aux caractéristiques propres à un autre mode de réalisation.

## Revendications

1. Bielle destinée à limiter des débattements relatifs entre des premier et second éléments rigides, essentiellement selon une direction longitudinale (X), ladite bielle comprenant un corps rigide allongé (1) qui s'étend sensiblement selon la direction longitudinale (X) et qui relie entre eux des premier et second manchons (2, 3), ces deux manchons étant destinés à être articulés respectivement par rapport aux éléments rigides et présentant respectivement des axes centraux (Y, Y') parallèles entre eux et perpendiculaires à la direction longitudinale (X), ledit corps comportant deux côtés opposés longitudinaux sur lesquels sont formées respectivement des première et seconde nervures externes longitudinales (8, 9) qui s'étendent chacune entre les premier et second manchons (2, 3), le corps (1) de la bielle comportant en outre au moins une première nervure transversale (10) comportant :
- une première partie (10a) qui relie entre eux le premier manchon (2) et la première nervure externe longitudinale (8) de manière à former une première structure triangulaire avec une première portion dudit premier manchon et une première portion (8c) de la première nervure externe longitudinale (8),
- et une seconde partie (10b) reliant entre eux le premier manchon et la seconde nervure externe longitudinale (9) de manière à former une seconde structure triangulaire avec une seconde portion dudit premier manchon et une première portion (9c) de la seconde nervure externe longitudinale (9),
**caractérisée en ce que** les première (8) et seconde (9) nervures externes longitudinales comportent chacune au moins deux parties (8c,8e ; 9c,9e) qui divergent en s'écartant de la direction longitudinale (X) respectivement à partir des premier (2) et second (3) manchons en formant avec la direction longitudinale (X) un angle aigu supérieur à 10°.

2. Bielle selon la revendication 1, dans laquelle ladite première nervure transversale (10) est sensiblement rectiligne.

3. Bielle selon la revendication 1, dans laquelle ladite première nervure transversale (10) est coudée en son milieu, en présentant une concavité tournée vers le second manchon (3).

4. Bielle selon l'une quelconque des revendications 1 à 3, dans laquelle ledit corps comporte en outre une seconde nervure transversale (12) qui comporte :
- une première partie (12a) qui relie entre eux le second manchon et la première nervure externe longitudinale (8) de manière à former une troisième structure triangulaire avec une première portion dudit second manchon et une seconde portion (8d) de la première nervure externe longitudinale (8),
- et une seconde partie (12b) reliant entre eux le second manchon et la seconde nervure externe longitudinale (9) de manière à former une quatrième structure triangulaire avec une seconde portion dudit second manchon et une seconde portion (9d) de la seconde nervure externe longitudinale (9).

5. Bielle selon la revendication 4, dans laquelle la seconde nervure transversale (12) est sensiblement rectiligne.

6. Bielle selon la revendication 4, dans laquelle la seconde nervure transversale (12) est coudée en son milieu, en présentant une concavité tournée vers le premier manchon (2).

7. Bielle selon l'une quelconque des revendications 4 à 6, dans laquelle les deux manchons sont reliés entre eux par au moins une nervure longitudinale centrale (14) qui est disposée entre les première (8) et seconde (9) nervures externes longitudinales et qui est reliée à chaque nervure transversale.

8. Bielle selon l'une quelconque des revendications 1 à 7, dans laquelle les deux parties divergentes (8c,8e ; 9c,9e) de chaque nervure externe longitudinale (8;9) se rejoignent au niveau du point de jonction entre ladite nervure externe longitudinale et la première nervure transversale (10).

9. Bielle selon la revendication 8, dans laquelle les deux parties divergentes des première et seconde nervures externes longitudinales sont constituées respectivement par lesdites première (8c,9c) et seconde (8d,9d) portions de chaque nervure externe longitudinale (8,9), lesdites première et seconde portions de chaque nervure externe longitudinale étant reliées entre elles par l'intermédiaire d'une partie rectiligne (8f,9f) qui appartient à la nervure externe longitudinale correspondante.

## Patentansprüche

1. Stange zur Begrenzung der relativen Bewegungen zwischen einem ersten und einem zweiten starren Element, im Wesentlichen in einer Längsrichtung (X), wobei diese Stange einen länglichen starren Körper (1) umfasst, der sich im Wesentlichen in der Längsrichtung (X) erstreckt und eine erste und eine zweite Hülse (2, 3) miteinander verbindet, wobei diese beiden Hülsen dazu vorgesehen sind, jeweils gelenkig gegenüber den starren Elementen angebracht zu werden, und jeweils Mittelachsen (Y, Y') aufweisen, die parallel zueinander und senkrecht zur Längsrichtung (X) verlaufen, wobei dieser Körper zwei voneinander abgewandte Längsseiten aufweist, an denen erste bzw. zweite Längs-Außenrippen (8, 9) gebildet sind, die sich jeweils zwischen der ersten und der zweiten Hülse (2, 3) erstrecken, wobei der Körper (1) der Stange ferner mindestens eine erste Querrippe (10) aufweist, bestehend aus:
- einem ersten Teil (10a), der die erste Hülse (2) und die erste Längs-Außenrippe (8) dergestalt miteinander verbindet, dass eine erste Dreiecksstruktur mit einem ersten Abschnitt dieser ersten Hülse (2) und einem ersten Abschnitt (8c) der ersten Längs-Außenrippe (8) entsteht, und
- einem zweiten Teil (10b), der die erste Hülse (2) und die zweite Längs-Außenrippe (9) dergestalt miteinander verbindet, dass eine zweite Dreiecksstruktur mit einem zweiten Abschnitt dieser ersten Hülse (2) und einem ersten Abschnitt (9c) der zweiten Längs-Außenrippe (9) entsteht,
**dadurch gekennzeichnet,**
**dass** die erste und zweite Längs-Außenrippe (8, 9) jeweils mindestens zwei Teile (8c, 8e; 9c, 9e) aufweisen, die divergierend verlaufen, indem sie sich von der ersten Hülse (2) bzw. der zweiten (3) Hülse aus von der Längsrichtung (X) entfernen und dabei zu dieser Längsrichtung (X) einen spitzen Winkel von mehr als 10° bilden.

2. Stange nach Anspruch 1, bei der die genannte erste Querrippe (10) im Wesentlichen geradlinig ist.

3. Stange nach Anspruch 1, bei der die genannte erste Querrippe (10) in ihrer Mitte gekrümmt ist, wobei sie der zweiten Hülse (3) eine konkave Seite zuwendet.

4. Stange nach einem der Ansprüche 1 bis 3, wobei der Körper (1) ferner eine zweite Querrippe (12) aufweist, bestehend aus:
- einem ersten Teil (12a), der die zweite Hülse (3) und die erste Längs-Außenrippe (8) dergestalt miteinander verbindet, dass eine dritte Dreiecksstruktur mit einem ersten Abschnitt dieser zweiten Hülse (3) und einem zweiten Abschnitt (8d) der ersten Längs-Außenrippe (8) entsteht, und
- einem zweiten Teil (12b), der die zweite Hülse (3) und die zweite Längs-Außenrippe (9) dergestalt miteinander verbindet, dass eine vierte Dreiecksstruktur mit einem zweiten Abschnitt dieser zweiten Hülse und einem zweiten Abschnitt (9d) der zweiten Längs-Außenrippe (9) entsteht.

5. Stange nach Anspruch 4, bei der die zweite Querrippe (12) im Wesentlichen geradlinig ist.

6. Stange nach Anspruch 4, bei der die zweite Querrippe (12) in ihrer Mitte gekrümmt ist, wobei sie der ersten Hülse (2) eine konkave Seite zuwendet.

7. Stange nach einem der Ansprüche 4 bis 6, bei der die beiden Hülsen miteinander durch mindestens eine Längs-Mittelrippe (14) verbunden sind, die zwischen der ersten und der zweiten Längs-Außenrippe (8, 9) angeordnet ist und mit jeder Querrippe verbunden ist.

8. Stange nach einem der Ansprüche 1 bis 7, bei der die beiden divergierenden Teile (8c, 8e; 9c, 9e) der Längs-Außenrippen (8, 9) sich im Bereich der Verbindungsstelle zwischen der jeweiligen Längs-Außenrippe und der ersten Querrippe (10) vereinen.

9. Stange nach Anspruch 8, bei der die beiden divergierenden Teile der ersten und der zweiten Längs-Außenrippe (8, 9) von den ersten Abschnitten (8c, 9c) bzw. den zweiten Abschnitten (8d, 9d) jeder Längs-Außenrippe (8, 9) gebildet werden, wobei diese ersten und zweiten Abschnitte der Längs-Außenrippen miteinander über einen geradlinigen Teil (8f, 9f) verbunden sind, der zu der jeweiligen Längs-Außenrippe gehört.

## Claims

1. A connecting rod intended to limit relative movements between first and second rigid components, mainly in a longitudinal direction (X), said connecting rod comprising a long rigid body (1) which extends approximately in the longitudinal direction (X) and which connects first and second bushes (2, 3), these two bushes being intended to be articulated respectively in relation to the rigid components and having respectively central parallel axes (Y, Y') perpendicular to the longitudinal direction (X), said body comprising two opposite longitudinal sides on which are formed respectively first and second external longitudinal ribs (8, 9) which each extend between the first and second bushes (2, 3), the body (1) of the connecting rod comprising in addition at least one first transverse rib (10) comprising :
- a first part (10a) which connects the first bush (2) and the first external longitudinal rib (8) so as to form a first triangular structure with a first portion of said first bush and a first portion (8c) of the first external longitudinal rib (8),
- and a second part (10b) connecting the first bush and the second external longitudinal rib (9) so as to form a second triangular structure with a second portion of said first bush and a first portion (9c) of the second external longitudinal rib (9),
**characterised in that** the first (8) and second (9) external longitudinal ribs each comprise at least two parts (8c,8e; 9c,9e) which diverge away from the longitudinal direction (X) respectively from the first (2) and second (3) bushes forming with the longitudinal direction (X) an acute angle greater than 10°.

2. A connecting rod according to claim 1, wherein said first transverse rib (10) is approximately rectilinear.

3. A connecting rod according to claim 1, wherein said transverse rib (10) is bent in its middle, having a concavity turned towards the second bush (3).

4. A connecting rod according to any one of claims 1 to 3, wherein said body comprises in addition a second transverse rib (12) which comprises :
- a first part (12a) which connects the second bush and the first external longitudinal rib (8) so as to form a third triangular structure with a first portion of said second bush and a second portion (8d) of the first external longitudinal rib (8),
- and a second part (12b) connecting the second bush and the second external longitudinal rib (9) so as to form a fourth triangular structure with a second portion of said second bush and a second portion (9d) of the second external longitudinal rib (9).

5. A connecting rod according to claim 4, wherein the second transverse rib (12) is approximately rectilinear.

6. A connecting rod according to claim 4, wherein the second transverse rib (12) is bent in its middle, having a concavity turned towards the first bush (2).

7. A connecting rod according to any of claims 4 to 6, wherein the two bushes are connected by at least one central longitudinal rib (14) which is arranged between the first (8) and second (9) external longitudinal ribs and which is connected to each transverse rib.

8. A connecting rod according to any one of claims 1 to 7, wherein the two divergent parts (8c,8e ; 9c,9e) of each external longitudinal rib (8;9) meet at the junction point between said external longitudinal rib and the first transverse rib (10).

9. A connecting rod according to claim 8, wherein the two divergent parts of the first and second external longitudinal ribs are constituted respectively by said first (8c,9c) and second (8d,9d) portions of each external longitudinal rib (8,9), said first and second portions of each external longitudinal rib being connected by means of a rectilinear part (8f,9f) which belongs to the corresponding external longitudinal rib.
